# EUROPEAN PATENT SPECIFICATION

(11) **EP 1 465 478 B1**
(45) Date of publication and mention of the grant of the patent: **16.08.2006**
(21) Application number: 02806500.1
(22) Date of filing: 19.12.2002
(51) Int. Cl.: A01K 13/00, A47K 10/42

(54) **WET-DRY CLEANING SYSTEM**
NASS-TROCKEN-REINIGUNGSSYSTEM
SYSTEME DE NETTOYAGE PAR VOIE SECHE ET HUMIDE

(30) Priority: 21.12.2001 US 36862
(43) Date of publication of application: 13.10.2004
(73) Proprietor: KIMBERLY-CLARK WORLDWIDE, INC., Neenah, WI 54956 (US)
(72) Inventor: KOENIG, David, William, Menasha, WI 54952 (US); KISTLER, Annastacia, Jane, Appleton, WI 54911 (US); PELUSO, John, Eugene, Appleton, WI 54911 (US); WARD, Margaret, Murphy, Appleton, WI 54913 (US); COLE, Douglas, Bryan, Hortonville, WI 54944 (US); MELIUS, Mark, Kevin, Appleton, WI 54914 (US); BENCIK, Sherrie, Lynn, Neenah, WI 54956 (US)
(74) Representative: Davies, Christopher Robert
(86) International application number: PCT/US2002/041120
(87) International publication number: WO 2003/059049

(56) References cited:
- WO-A-01/64525
- US-A- 5 650 016

## Description

There are many different methods for cleaning soils from surfaces. Vacuum methods are useful for removing particulate matter and larger objects such as dirt granules, paper, and other solids. For foreign matter which is adsorbed onto a surface, however, it is often advantageous to apply physical force to clean the surface. Dry wiping products, including paper towels and tissue, are useful for cleaning surfaces in this way. This physical force may be further aided by the application of a liquid, even in small amounts. This approach includes for example a spray of water, an application of a cleaning solution, or contact with a sheet or sponge containing a liquid, optionally followed by wiping of the surface with a dry wipe which is absorbent.

Wet wipes are a specialized type of cleaning sheet product which have many applications. They may be used with small children and infants when changing diapers, they may be used for household cleaning tasks, they may be used for cleaning hands, they may be used for facial cleaning including removal of cosmetics, they may be used as a bath tissue, they may be used as by a caregiver to clean a disabled or incontinent adult, or they may be used in and for a whole host of other applications, where it is advantageous to have a wipe or towel that has some wetness or moisture in it.

Wet wipes can be any wipe, towel, tissue or sheet like product including natural fibers, synthetic fibers, synthetic material and combinations thereof, that is wet or moist or becomes wet during use or prior to use. Wet wipes may be dispersible when in contact with water or may be non-dispersible. Examples of wet wipes are disclosed in application serial numbers 09/564,449; 09/564,213; 09/565,125; 09/564,837; 09/564,939; 09/564,531; 09/564,268; 09/564,424; 09/564,780; 09/564,212; 09/565,623 all filed May 4, 2000, application serial no. 09/223,999 filed December 31, 1998, and in application serial number 09/900,698 filed July 6, 2001.

When faced with a wide array of options for cleaning a surface, it can be difficult for a user to determine which option or specific combination of options will provide maximum cleansing without requiring unreasonable effort and expense. There is thus a need for a cleaning system which provides for efficient cleaning of a surface. Ideally, this system will involve as few steps as possible and will utilize products, whether wet or dry, which are readily available. It is also desirable to provide instructions to a user to carry out the process of the cleaning system.

WO 01/64525 discloses a dispenser having at least two compartments, one compartment holding a plurality of tissues soaked in a liquefying agent and another compartment holding a plurality of dry tissues.

According to the invention as defined in claim 1, there is provided a package for facilitating the cleaning of an animal body surface, comprising a dry product comprising a first number of portions; a wet product comprising a second number of portions; and instructions to wipe an animal body surface at least three times with a combination of a fresh portion of the dry product and a fresh portion of the wet product.

The instructions comprise directions to a user to wipe the surface with a wet product, followed by wiping the surface with a dry product, followed by wiping the surface with a dry product, and the first number of portions is double the second number of portions; or the instructions comprise directions to a user to wipe the surface with a wet product, followed by wiping the surface with a dry product, followed by wiping the surface with a wet product, and the second number of portions is double the first number of portions.

These embodiments of the invention may further comprise a package wherein the wet product is a pre-moistened wet wipe; the dry product is tissue; the instructions are enclosed in the package; the instructions are printed on the package; the surface comprises human skin; and the system further comprises a dispenser.

These embodiments may yet further comprise a package wherein the first fresh product is associated with a first product identifier, and the second fresh product is associated with a second product identifier; the first product identifier and the second product identifier comprising at least one term that is the same.

According to the invention as defined in claim 8, there is provided a method for facilitating the cleaning of an animal body surface, comprising:
enclosing in a package a first fresh product, said first fresh product being a dry product enclosing a second fresh product in said package, said second fresh product being a wet product; and
offering the package for sale;
said method characterised by the package comprising instructions to wipe the surface at least three times with a combination of the first fresh product and the second fresh product; wherein
the instructions comprise directions to a user to wipe the surface with a dry product, followed by wiping the surface with a wet product, followed by wiping the surface with a dry product; and
the first number of portions is double the second number of portions; or
the instructions comprise directions to a user to wipe the surface with a wet product, followed by wiping the surface with a dry product, followed by wiping the surface with a dry product; and
the first number of portions is double the second number of portions.

Embodiments of the invention may further comprise a method further comprising enclosing a dispenser in said package; a method wherein the surface comprises skin; and a method wherein the first fresh product is associated with a first product identifier, and the second fresh product is associated with a second product identifier; the first product identifier and the second product identifier comprising at least one term that is the same.

### BRIEF DESCRIPTION OF THE DRAWINGS

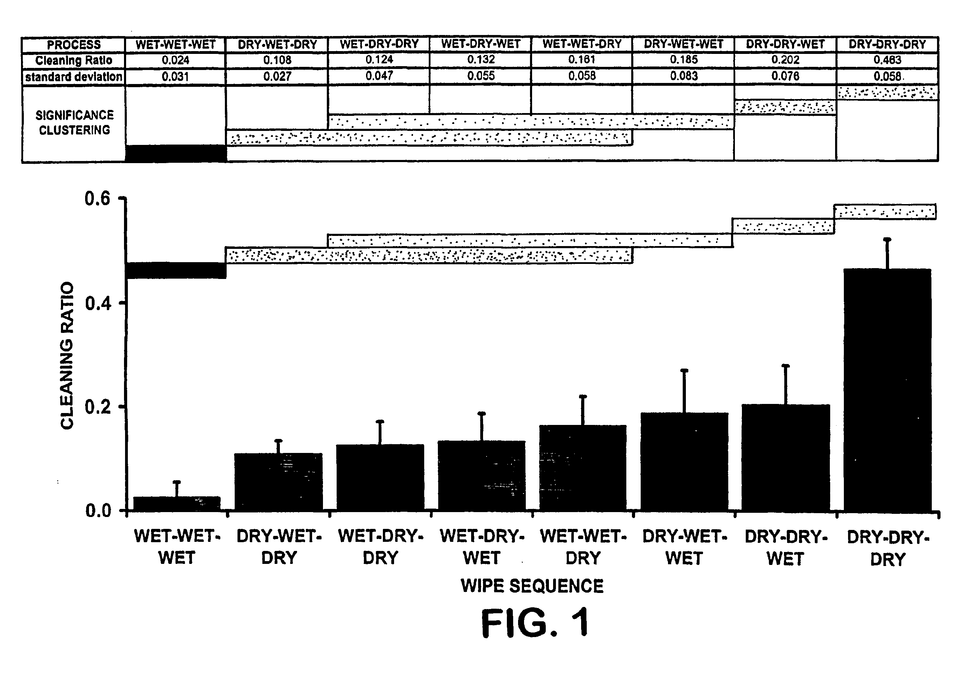

Figure 1 is a graph of the cleaning ratios measured for all-wet, all-dry, and wet-dry cleaning processes.

### DETAILED DESCRIPTION

A cleaning system is described which includes the combination of wiping with a dry product and wiping with a wet product. This wet-dry cleaning system unexpectedly provides for the rapid cleaning of soils from a variety of surfaces, including human skin. Cleaning a surface by the method of this system produces a clean surface more efficiently than cleaning with a dry product alone. A user may be instructed to carry out the method when cleaning a surface.

The wet-dry cleaning system can be used on a wide range of surfaces. Surfaces to be cleaned include inanimate surfaces such as furniture; countertops; walls; floors; bathroom and kitchen fixtures; electronic equipment including housings and displays; interiors and exteriors of automobiles, trains, aircraft, watercraft and spacecraft; windows; industrial equipment; and electronic boards. These surfaces may, for example, contain wood, fibers, plastic, metal, cloth, ceramic, glass, paint, or minerals. Surfaces to be cleaned also include biological surfaces, and according to the invention including animal body surfaces such as skin, hair, fingernails, and toenails; and the surfaces of vegetables, fruits, grains, and meats. The wet-dry cleaning system is particularly effective in cleaning soils from skin. "Soil" includes a wide range of undesirable substances which may be removed from a surface. Soil includes a wide range of biological secretions including, but not limited to, blood, feces, meconium, urine, bile, cerumen, colostrum, gastric juice, intestinal secretions, nasal secretions, menses, mucus, saliva, sebum, semen, smegma, sputum, sweat, tears, and/or vernix caseosa. Soil can also contain undigested or indigestible food; vegetable fiber such as cellulose; water; mucus; proteins; bacteria; fungi; inorganic salts; cellular debris; applied cosmetics and other foreign substances.

The wet product used may be any type of substance which contains moisture and which can be used to wipe a surface. Examples of wet products include damp cloths, sponges, and wet wipes. These products are provided to the user in a moist condition. The wet product may include agents other than water. Other agents which may be present include antimicrobials, skin health agents, or cleaning compounds such as detergents or surfactants. In addition to the above-mentioned U.S. patent applications, moist products are described in U.S. Pat. Nos. 6,213,344; 6,121,165; 6,028,018; 5,964,351; 5,935,880; 5,667,635; 5,656,361; 5,629,081; and 5,540,332.

Wet products may be made by the application of a wetting solution to a fibrous web of material. Examples of wetting solutions are given in the above mentioned U.S. applications serial numbers 09/900,698; 09/564,449; 09/564,213; 09/565,125; 09/564,837; 09/564,939; 09/564,531; 09/564,268; 09/564,424; 09/564,780; 09/564,212; 09/565,623; and 09/223,999. In this context, a fibrous product is considered "wet" when the wetting solution is added to the web with an add-on between about 25% and the maximum add-on which can be accepted by the web (i.e. saturation). To determine the liquid add-on, first the weight of a portion of dry web having specific dimensions is determined. The dry web corresponds to the basesheet which can be fed to the wetting and winding apparatus. Then, the amount of liquid by weight equal to a multiple (e.g. 1, 1.5, 2.5, 3.3, etc., times) where 1 = 100%, 2.5 = 250%, etc., of the portion of the dry web, or an increased amount of liquid measured as a percent add-on based on the weight of the dry web portion, is added to the web to make it moistened, and then referred to as a "wet" web. Preferably, the wetting solution add-on is between about 25% and 700%; more preferably between 50% and 400%; more preferably still between 100% and 350%; more preferably still between 150% and 300%; more preferably still between 200% and 250%.

The dry product used may be any type of substance which can be used to wipe a surface and which is not a moist product. For example, the dry product may have a liquid add-on of less than 25%. In other examples, the dry product may have a liquid add-on of less than 15%, or less than 5%. Examples of dry wiping product include sheets such as nonwovens, tissue (including toilet tissue and facial tissue), and paper towels; cloth; cotton pads and swabs; and chamois.

Wet product and dry product may independently be provided in a variety of configurations, for example as a stack of separate sheets, as a folded stack of perforated sheets, or as a roll of wipes. The wet and dry product may each contain a plurality of portions, such that a single wiping step utilizes one portion of the product. The portion may be a single sheet, such as an individual sheet from a stack or a sheet defined by perforations, or it may be more than one sheet.

The wet-dry cleaning system includes at least 3 wiping steps, each step involving a wipe with a fresh portion of product. A product is considered "fresh" if its surface does not contain soil. For example, wet cloths or sponges may be considered fresh if, after wiping soil from a surface, the soil is removed from the product by rinsing or washing. Similarly, a chamois may be considered fresh if it is allowed to dry after absorbing liquid from a surface. Disposable wiping products or portions thereof such as toilet tissue, paper towels, napkins, and wet wipes are considered fresh if they have not been used to remove soil from a surface.

The wet-dry cleaning system includes wiping the surface with a dry product and wiping the surface with a wet product in various sequences. The wet-dry cleaning thus includes the processes of:
dry wiping, followed by dry wiping, followed by wet wiping (ddw) (not according to the invention) ;
dry wiping, followed by wet wiping, followed by dry wiping (dwd);
wet wiping, followed by dry wiping, followed by dry wiping (wdd);
wet wiping, followed by wet wiping, followed by dry wiping (wwd) (not according to the invention) ;
dry wiping, followed by wet wiping, followed by wet wiping (dww) (not according to the invention) ; and
wet wiping, followed by dry wiping, followed by wet wiping (wdw) (not according to the invention) ;

The progress of a cleaning process can be examined by measuring the amount of adsorbed particles removed from a surface. A useful method for these measurements is the detection of fluorescent beads, which can be deposited on a surface and then removed by the cleaning process of interest. Once a sample of fluorescent beads has been removed from a surface, the beads can be detected and counted, for example by a flow cytometer, providing for quantification of the amount of particles remaining on a surface after a cleaning process.

The wet-dry cleaning system can be used to clean a variety of surfaces, employing any wet product and any dry product. The wet-dry cleaning process may be facilitated by providing a user with a wet and/or a dry product, together with appropriate instruction to carry out at least one of the wet-dry processes. The system includes instructions for carrying out the cleaning process and includes a wet product or a dry product. The system may also include a dispenser for the product. The system includes both the wet product and the dry product together, and the product (or products) and the instructions are present together in some form of packaging. In some instances, the dispenser may serve as the packaging for the product and the instructions.

The wet and dry products provided in a package may be provided as a container of pre-moistened wet wipes and a roll or stack of dry product, with the process instructions enclosed in the package. The wet and dry products provided in a package may be provided as a single dispenser containing both wet wipes and dry tissue or towels, with instructions on the packaging. As the wet product and the dry product are packaged together, it may be desirable to prevent the wet product and the dry product from contacting each other, so as to maintain the moisture level of each at a useful level.

The instructions may be printed, for example on a sheet of paper, in a brochure or pamphlet, or in a book. The instructions may be audible or visual, for example as a recording on a magnetic videotape or audio tape, on a CD-ROM, or on a computer-readable medium. The instructions may be printed on the packaging, on a dispenser, or may be on or enclosed in the packaging of the wet and dry product. For example, instructions may be enclosed within packaging or printed on packaging, where the packaging encloses a wet product and a dry product. The instructions may be provided independent of the product or packaging, such as by direct mail, a broadcast message, or a retail display.

The instructions communicate to a user the steps of a wet-dry cleaning process. For example, the instructions may direct the user to wipe a surface with a fresh portion of dry product, followed by wiping the surface with a fresh portion of wet product, followed by wiping the surface with a fresh portion of dry product. The instructions may include directions to perform additional wiping of the surface beyond the wet-dry cleaning process. The instructions may also include directions or suggestions for tasks such as preparing the surface to be cleaned, removing the product from its packaging or from a dispenser, and disposal of the used product. The instructions may refer to the cleaning of specific surfaces, such as animal body surfaces.

The wet product and dry product are packaged together with a large number of portions of each product. The number of portions of each provided in a single package correspond to the relative amounts of each product which is to be used in a cleaning process. A package which is designed to facilitate the "ddw", "dwd", or "wdd" cleaning processes contains twice as many portions of dry product as wet product. In this way, the user does not end up with an excess of one type of product when the other type of product has been exhausted.

The package includes a number of portions of wet product, twice as many portions of dry product, and instructions to carry out a cleaning process using two fresh portions of dry product and one fresh portion of wet product. Such a cleaning process may involve dry wiping, followed by dry wiping, followed by wet wiping (ddw); and, according to the present invention, does include dry wiping, followed by wet wiping, followed by dry wiping (dwd); or wet wiping, followed by dry wiping, followed by dry wiping (wdd). The instructions may include directions or a suggestion to repeat the process as necessary.

The wet and dry products may be provided in a single-use packet, the packet containing a number of portions of each product. For example, a single-use cleaning packet would contain one portion of a wet product and two portions of a dry product, and would contain instructions on using the products to clean a surface. The wet product, dry product, and packaging for a single-use packet can all be made sterile such that the packet could be used for cleaning surfaces in a sterile medical environment such as a hospital, ambulance, or clinic.

The wet product and dry product can each also have a name, brand name, or other identifier associated with it, for example by being placed on the product, the product's packaging, or packaging that contains several products. These identifiers that are associated with the wet product and dry product may be the same, similar or substantially similar to each other. In this way the good will, loyalty, or consumer acceptance of the identifier and/or of the dry or wet product can be used, or inure to, the benefit of the other product. Thus, the use of the same or substantially similar identifiers would be envisioned, such as by way of example and without limitation, "XXXX" for dry product and "moist XXXX", "wet XXXX", "XXXX wet", "xxxx", "Xxxx", "Xx", "XXXX's" or "Xxxx moist" for the wet product. In a similar manner, the use of "YYYY" for wet product could be extended to "dry YYYY", "YYYY dry, "yyyy", "Yyyy", "Yy", "YYYY's" or "Yyyy dry" for the dry product. Changes in capitalization and/or font of an identifier are for the purposes of this disclosure considered to be the same identifier. Such identifiers or brand names, by way of example and without limitation, could be or include the term Charmin®, the term White Cloud®, the term Angel Soft®, the term Northern®, the term Soft N Gentle®, the term Marcal®, the term Coronet®, the term MoistMates® or the term Soft Weve®.

Accordingly, the dry product and the wet product may have identifiers associated which are similar to each other. Any instructions to carry out the cleaning process may include suggestion to use the similarly identified wet and dry products to carry out the cleaning process, reducing the burden on the user. The wet product may have an identifier associated with it which contains at least one term that is the same as an identifier associated with the dry product. Similarly, the dry product may have an identifier associated with it which contains at least one term that is the same as an identifier associated with the wet product.

### EXAMPLES

### Protocol For Extraction of Soil From Skin-like Material

Hydrated Vitro-Corneum^{™} (IMS, Inc., Milford, CT) samples to be tested were cut into five uniform pieces measuring approximately 5 cm x 5 cm (±1.5 cm) using scissors. An aliquot of 20µl of an aqueous solution containing fluorescent beads (1.7 x 10⁸ beads per milliliter water) was pipetted onto the center of each piece of material. The beads were carboxylate-modified 10 µm particles labeled with fluorescein isothiocyanate (FITC) (BANGS LABORATORIES, INC., Fishers, IN). The Vitro-Corneum^{™} was placed into a 50-ml conical tube and incubated at room temperature (22°C ± 2°C) for 2 hours to allow the beads time to adhere to the test material. Following incubation, 20 ml of 0.25% (w/v) Sodium dodecyl sulfate (SDS, SIGMA-ALDRICH, St. Louis, MO, catalog #86,401-1) was added to each tube. The tubes were sonicated with a VIRSONIC MICROTIP sonicator (model #475, VIRSONIC, Gardiner, NY) at setting #3, 10% of output power, for 3 minutes. To avoid contamination, the sonicator tip was swabbed with alcohol between samples. Immediately following sonication, one 2-ml sample was removed from each 50-ml tube and placed into a 5-ml tube for flow cytometry analysis.

The size of soil particles can vary widely. For example, approximate sizes of soils are believed to be 4 nanometers (nm) for globular proteins, 10-100 nm for viruses, 1-10 micrometers (µm) for most bacteria, 10-30 µm for most eukaryotic animal cells, and 10-80 µm and greater for pollen and inorganic/organic aggregates. Since most of soils are cells (bacterial or eukaryotic) or components of those cells, the surface properties of the soil can be characterized by a net negative charge. The net negative charge is associated with but not limited to the presence of glyco- and mucoproteins most of them containing sialic acid residues, phospholipids, sulphates of mucopolysaccharides, cellulose, lipopolysaccharides, and teichoic acids contained in the various cell structures.

A 10 µm particle as used in these examples thus has a size that is approximately in the middle of the range of sizes for most soils associated with the skin surface. A carboxylate-modified bead as used in these examples is believed to have surface properties that mimic the negative charge of most biological soils. The Vitro-Corneum^{™} product is used to provide a surface which is similar to human skin.

### Example 1 - Extraction From Skin-like Material After Cleaning

Vitro-Corneum^{™} was cut into 5 cm x 5 cm (±1.5 cm) squares using scissors. 10 µl of the 10 µm FITC labeled carboxlyate-modified beads were pipetted onto each piece of Vitro-Corneum^{™}. The pieces of Vitro-Corneum™ were placed in a hydration chamber (IMS, Inc., Milford, CT) overnight. The following day, samples of the materials to be used for wiping were cut into approximately 13 cm x 5 cm pieces (±1.5 cm). Cottonelle® Fresh^{™} Rollwipes samples (KIMBERLY-CLARK CORPORATION, Neenah, WI) were placed into sealed plastic bags after preparation to prevent the test product from drying out prior to testing. Additionally, each piece of Vitro-Corneum^{™} was removed from the hydration chamber immediately before testing. The remaining pieces of the Vitro-Corneum^{™} were left in the chamber to remain hydrated.

To ensure that each test material has uniform contact time and pressure with the Vitro-Corneum^{™}, a Monitor/Slip & Friction^{™} Model #32-06 (TESTING MACHINES, INC., Amityville, NY) wiping instrument or an equivalent instrument can be used. The instrument consists of a moving horizontal bed to contain test fluids and substrates. A probe capable of holding test materials is suspended above the horizontal bed. The probe is lowered to the sample bed using manual controls. The sample bed is then moved by a variable speed DC motor and slide wire assembly to create a wiping motion. Contact time was set at approximately 2.0 seconds (±0.5 seconds) and pressure was set to 1 pound per square inch (PSI) (7kPa). The test material was loaded onto the wiping instrument while the Vitro-Corneum^{™} piece was secured onto the wiping platform using tape. The Vitro-Corneum^{™} was wiped the desired number of times with the material to be examined. For repetitive wiping, each wipe was performed with a fresh piece of test material. Cottonelle® Toilet Paper (KIMBERLY-CLARK CORPORATION, Neenah, WI) was tested using the fabric side of the material and wiping in the cross direction. Cottonelle® Fresh^{™} Rollwipes were wiped in the machine direction. The Vitro-Corneum^{™} pieces were placed into a 50-ml conical tube. 10 ml of 0.25% SDS was added to each tube. The beads were extracted from each sample using the Virsonic^{™} microtip probe sonicator for 3 minutes at setting #3, 10% output power. To avoid contamination, the sonicator tip was swabbed with alcohol between samples. Three 2-ml samples were withdrawn from each 50-ml conical tube and placed into 5-ml tubes for flow cytometry analysis, thus each individual sample was analyzed in triplicate.

Controls were performed to ensure the accuracy of the results. The positive control consisted of 10 µl of the bead suspension, at original concentration (1.7 x 10⁸ beads per ml), applied to Vitro-Corneum^{™}. The positive control was not wiped with any test materials, but was extracted and analyzed to ensure that all beads were completely removed from the Vitro-Corneum^{™} substrate by sonication. The negative control consisted of a piece of unwiped Vitro-Corneum^{™}, without beads, extracted and analyzed to provide a baseline for flow cytometry analysis. A positive wiping control was also employed, consisting of Vitro-Corneum^{™} prepared with 10 µl of the bead suspension and wiped once on the wiping apparatus with a portion of KIMWIPES® EX-L Wipers (KIMBERLY-CLARK CORPORATION, Neenah, WI). The wiping control ensured that the wiping apparatus operated properly and provided a control that demonstrated daily consistency.

### Example 2 - Flow Cytometry Analysis of Fluorescent Beads

The flow cytometry analyses were performed on a FACSCALIBUR flow cytometer (BECTON DICKINSON BIOSCIENCES, San Jose, CA). equipped with a 15-mW, 488-nm, air-cooled argon ion laser. Samples were delivered at the low flow rate, corresponding to 12 µl (±2 µl) per minute. Forward scatter, side scatter, and one fluorescent signal were measured. A band pass filter of 530 nm (515 to 545 nm) was used to collect the FITC fluorescence. Forward scatter was collected with a diode detector. Side scatter was collected with a photomultiplier tube. Using the CELLQUEST version 3.1 software (BECTON DICKINSON), the acquired data was analyzed and the desired bead population was counted.

### Example 3 - Comparative Results From Cleaning Processes

Cleaning processes utilizing three wiping steps were performed for all combinations of wet and dry wiping. A cleaning process utilizing one wipe with a portion of KIMWIPES® EX-L-Wipers was performed as a control. Each process was repeated 14-15 times, and the results were averaged to provide the percentage of fluorescent beads removed.

The following parameters were calculated from the fluorescent imaging analysis after the three-step cleaning procedures were complete, and are given in Table A:
1) ratio of beads removed to beads applied;
2) ratio of beads removed by wet-dry process to beads removed by control process; and
3) ratio of beads remaining after wet-dry process to beads remaining after control process.

**TABLE A**

| Process* | beads removed / beads applied (%) | beads removed / control | beads remaining / control |
|---|---|---|---|
| ddd | 53.7 | 2.451 | 0.593 |
| ddw | 79.8 | 3.803 | 0.255 |
| dww | 81.5 | 3.507 | 0.241 |
| wwd | 83.9 | 3.611 | 0.210 |
| wdw | 86.8 | 3.739 | 0.171 |
| wdd | 87.6 | 4.173 | 0.157 |
| dwd | 89.2 | 4.250 | 0.136 |
| www | 97.6 | 4.458 | 0.030 |

| | | | |
|---|---|---|---|
| * d = wipe with dry product; w = wipe with wet product | | | |

The same data was used to generate the graph of Figure 1. The cleaning ratio in Figure 1 is defined as: 1 - (beads removed / beads applied), with a lower cleaning ratio corresponding to better cleaning. Also depicted in Figure 1 are blocks indicating statistical significance clustering. The cleaning ratios for two processes which are positioned under a single box are not statistically distinguishable from each other.

In a surprising and unexpected result, the two wet-dry cleaning processes having the best cleaning ratios were processes involving only a single wet wipe each, dwd and wdd. As is seen from Table A and Figure 1, the all-wet cleaning process (www) provides the lowest cleaning ratio of all the processes examined. Thus, processes involving a majority of wet wipes would be expected to yield the most thorough cleaning. The wet-dry cleaning processes having the lowest cleaning ratios were the dwd and the wdd processes. All of the wet-dry cleaning processes (i.e. exclusive of the "ddd" and "www" processes) performed remarkably better than the all dry process.

For the wet-dry cleaning processes, the highest percentage of beads appear to have been removed by processes involving a wet wipe followed by a dry wipe (wwd, wdw, wdd, and dwd). When examined as a comparison with the control process, the ddw process, in addition to the processes involving a wet wipe followed by a dry wipe, also removed a relatively high number of beads.

In general, the data reflect that the combination of a dry wipe with a wet wipe in an overall three-step sequence provides more thorough cleaning than the use of dry wipes alone. In comparing the "ddd" process to the "ddw" process, the percentage of beads removed increased by at least 48% with the inclusion of a wet wiping step. In comparing the "ddd" process to the "dww" process, the ratio of beads removed compared to the control increased by at least 43% with the inclusion of a wet wiping step. In comparing the "ddd" process to the "ddw" process, the ratio of beads remaining compared to the control was reduced by at least 56% with the inclusion of a wet wiping step.

Without wishing to be bound by any theory of operation, it is believed that dry wipes remove soils by providing mass transfer to the soils, imparting enough momentum to the soils to remove them from the surface. Dry wipes can also absorb liquid on the surface, as well as soils contained in the liquid. Wet wipes are believed to help solubilize the surface and the soils, reducing the friction and the attractive interactions between the surface and the soil. The combination of the cleaning action of the dry wipe with the cleaning action of the wet wipe can take advantage of both types of cleaning - mass transfer of soils and solubilization of soils. For processes involving a wet wipe followed by a dry wipe, the wet wiping step is believed to increase the amount of soil available for removal, the soil removal being effectively provided by the subsequent dry wiping step. This "wet-then-dry" sequence within the overall wet-dry cleaning process thus advantageously provides for increased cleaning efficiency.

## Claims

1. A package for facilitating the cleaning of an animal body surface, comprising:
a dry product comprising a first number of portions;
a wet product comprising a second number of portions; said package **characterised by** comprising
instructions to wipe an animal body surface at least three times with a combination of a fresh portion of the dry product and a fresh portion of the wet product, wherein
the instructions comprise directions to a user to wipe the surface with a dry product, followed by wiping the surface with a wet product, followed by wiping the surface with a dry product; and
the first number of portions is double the second number of portions; or
the instructions comprise directions to a user to wipe the surface with a wet product, followed by wiping the surface with a dry product, followed by wiping the surface with a dry product; and
the first number of portions is double the second number of portions.

2. The package of claim 1, wherein the dry product is tissue.

3. The package of claim 1 or 2, further comprising a dispenser.

4. The package of any of claims 1 to 3, wherein the instructions are enclosed in the package.

5. The package of any of claims 1 to 4, wherein the instructions are printed on the package.

6. The package of any of claims 1 to 5, wherein the surface comprises human skin.

7. The package of any of claims 1 to 6, wherein the dry product is associated with a first product identifier, and the wet product is associated with a second product identifier; the first product identifier and the second product identifier comprising at least one term that is the same.

8. A method for facilitating the cleaning of an animal body surface, comprising:
enclosing in a package a first fresh product, said first fresh product being a dry product and comprising a first number of portions;
enclosing a second fresh product in said package, said second fresh product being a wet product and comprising a second number of portions;
and offering the package for sale;
said method **characterised by**
the package comprising instructions to wipe the surface at least three times with a combination of the first fresh product and the second fresh product; wherein
the instructions comprise directions to a user to wipe the surface with a dry product, followed by wiping the surface with a wet product, followed by wiping the surface with a dry product; and
the first number of portions is double the second number of portions; or
the instructions comprise directions to a user to wipe the surface with a wet product, followed by wiping the surface with a dry product, followed by wiping the surface with a dry product; and
the first number of portions is double the second number of portions.

9. The method of claim 8, further comprising enclosing a dispenser in said package.

10. The method of claim 8 or 9, wherein the surface comprises skin.

11. The method of any of claims 8 to 10, wherein the first fresh product is associated with a first product identifier, and the second fresh product is associated with a second product identifier; the first product identifier and the second product identifier comprising at least one term that is the same.

## Patentansprüche

1. Packung zum Erleichtern des Reinigens einer Tierkörperoberfläche, enthaltend:
ein Trockenprodukt mit einer ersten Anzahl von Abschnitten;
ein Nassprodukt mit einer zweiten Anzahl von Abschnitten; wobei die Packung **dadurch gekennzeichnet ist, dass**
sie Anleitungen zum wenigstens dreimaligen Wischen einer Tierkörperoberfläche mit einer Kombination aus einem frischen Abschnitt des Trockenproduktes und einem frischen Abschnitt des Nassproduktes enthält, wobei
die Anleitungen Anweisungen für einen Benutzer enthalten, die Oberfläche mit einem Trockenprodukt zu wischen, anschließend die Oberfläche mit einem Nassprodukt zu fischen und dann die Oberfläche mit einem Trockenprodukt zu wischen, und
die erste Anzahl der Abschnitte das Doppelte der zweiten Anzahl von Abschnitten ist, oder
die Anleitungen Anweisungen für einen Benutzer enthalten, die Oberfläche mit einem Nassprodukt zu wischen, anschließend die Oberfläche mit einem Trockenprodukt zu wischen und dann die Oberfläche mit einem Trockenprodukt zu wischen, und
die erste Anzahl von Abschnitten das Doppelte der zweiten Anzahl von Abschnitten ist.

2. Packung nach Anspruch 1, bei dem das Trockenprodukt ein Papiertuch ist.

3. Packung nach Anspruch 1 oder 2, weiterhin enthaltend einen Spender.

4. Packung nach einem der Ansprüche 1 bis 3, bei der die Anweisungen in der Packung eingeschlossen sind.

5. Packung nach einem der Ansprüche 1 bis 3, bei der die Anleitungen auf die Packung gedruckt sind.

6. Packung nach einem der Ansprüche 1 bis 5, bei der die Oberfläche die menschliche Haut enthält.

7. Packung nach einem der Ansprüche 1 bis 6, bei der das Trockenprodukt mit einer ersten Produktkennzeichnung versehen ist und das Nassprodukt mit einer zweiten Produktkennzeichnung versehen ist, wobei die erste Produktkennzeichnung und die zweite Produktkennzeichnung wenigsten einen Begriff enthalten, der derselbe ist.

8. Verfahren zum Erleichtern des Reinigens einer Tierkörperoberfläche, enthaltend:
Einschließen eines ersten frischen Produktes in einer Packung, wobei das erste frische Produkt ein Trockenprodukt ist und eine erste Anzahl von Abschnitten enthält;
Einschließen eines zweiten frischen Produktes in der Packung, wobei das zweite frische Produkt ein Nassprodukt ist, und eine zweite Anzahl von Abschnitten enthält,
und Anbieten der Verpackung für den Verkauf,
wobei das Verfahren **dadurch gekennzeichnet ist, dass**
die Packung Anleitungen zum wenigstens dreimaligen Wischen der Oberfläche mit einer Kombination aus dem ersten frischen Produkt und dem zweiten frischen Produkt umfasst, wobei
die Anleitungen Anweisungen für einen Benutzer beinhalten, die Oberfläche mit einem Trockenprodukt zu wischen, anschließend die Oberfläche mit einem Nassprodukt zu wischen und dann die Oberfläche mit einem Trockenprodukt zu wischen; und
die erste Anzahl der Abschnitte das Doppelte der zweiten Anzahl von Abschnitten ist, oder
die Anleitungen Anweisungen für einen Benutzer enthalten, die Oberfläche mit einem Nassprodukt zu wischen, anschließend die Oberfläche mit einem Trockenprodukt zu wischen und dann die Oberfläche mit einem Trockenprodukt zu wischen, und
die erste Anzahl der Abschnitte das Doppelte der zweiten Anzahl von Abschnitten ist.

9. Verfahren nach Anspruch 8, weiterhin enthaltend das Einschließen eines Spenders in der Packung.

10. Verfahren nach Anspruch 8 oder 9, bei dem die Oberfläche Haut enthält.

11. Verfahren nach einem der Ansprüche 8 bis 10, bei dem das erste frische Produkt mit einer ersten Produktkennzeichnung versehen ist und das zweite frische Produkt mit einer zweiten Produktkennzeichnung versehen ist, wobei die erste Produktkennzeichnung und die zweite Produktkennzeichnung wenigstens einen Begriff enthalten, der derselbe ist.

## Revendications

1. Ensemble conditionné pour faciliter le nettoyage d'une surface corporelle animale, comprenant :
un produit sec comprenant un premier nombre de portions ;
un produit humide comprenant un second nombre de portions ;
ledit ensemble conditionné étant **caractérisé par le fait qu'**il comprend :
des instructions pour essuyer une surface corporelle animale au moins trois fois avec une combinaison d'une portion neuve du produit sec et d'une portion neuve du produit humide,
les instructions comprenant des directives, pour un utilisateur, d'essuyer la surface avec un produit sec, puis d'essuyer la surface avec un produit humide, puis d'essuyer la surface avec un produit sec ;
le premier nombre de portions étant le double du second nombre de portions ; ou
les instructions comprenant des directives, pour un utilisateur, d'essuyer la surface avec un produit humide, puis d'essuyer la surface avec un produit sec, puis d'essuyer la surface avec un produit sec ;
le premier nombre de portions étant le double du second nombre de portions.

2. Ensemble conditionné selon la revendication 1, dans lequel le produit sec est un papier mousseline.

3. Ensemble conditionné selon la revendication 1 ou 2, comprenant, en outre, un distributeur.

4. Ensemble conditionné selon l'une quelconque des revendications 1 à 3, dans lequel les instructions sont incluses dans l'ensemble conditionné.

5. Ensemble conditionné selon l'une quelconque des revendications 1 à 4, dans lequel les instructions sont imprimées sur l'ensemble conditionné.

6. Ensemble conditionné selon l'une quelconque des revendications 1 à 5, dans lequel la surface comprend la peau humaine.

7. Ensemble conditionné selon l'une quelconque des revendications 1 à 6, dans lequel le produit sec est associé à un premier identificateur de produit, et le produit humide est associé à un second identificateur de produit ; le premier identificateur de produit et le second identificateur de produit comprenant au moins un terme en commun.

8. Méthode pour faciliter le nettoyage d'une surface corporelle animale, comprenant :
l'inclusion, dans un ensemble conditionné, d'un premier produit neuf, ledit premier produit neuf étant un produit sec et comprenant un premier nombre de portions ;
l'inclusion d'un second produit neuf dans ledit ensemble conditionné, ledit second produit neuf étant un produit humide et comprenant un second nombre de portions ; et
l'offre en vente de l'ensemble conditionné ;
ladite méthode étant **caractérisée par le fait que**
l'ensemble conditionné comprend des instructions pour essuyer la surface au moins trois fois avec une combinaison du premier produit neuf et du second produit neuf,
les instructions comprenant des directives, pour un utilisateur, d'essuyer la surface avec un produit sec, puis d'essuyer la surface avec un produit humide, puis d'essuyer la surface avec un produit sec ;
le premier nombre de portions étant le double du second nombre de portions ; ou
les instructions comprenant des directives, pour un utilisateur, d'essuyer la surface avec un produit humide, puis d'essuyer la surface avec un produit sec, puis d'essuyer la surface avec un produit sec ;
le premier nombre de portions étant le double du second nombre de portions.

9. Méthode selon la revendication 8, comprenant, en outre, l'inclusion d'un distributeur dans l'ensemble conditionné

10. Méthode selon la revendication 8 ou 9, dans laquelle la surface comprend la peau.

11. Méthode selon l'une quelconque des revendications 8 à 10, dans laquelle le premier produit neuf est associé à un premier identificateur de produit, et le second produit neuf est associé à un second identificateur de produit ; le premier identificateur de produit et le second identificateur de produit comprenant au moins un terme en commun.
